# EUROPÄISCHE PATENTSCHRIFT

(11) **EP 0 466 691 B1**
(45) Veröffentlichungstag und Bekanntmachung des Hinweises auf die Patenterteilung: **03.03.1993**
(21) Anmeldenummer: 90900756.9
(22) Anmeldetag: 13.12.1989
(51) Int. Cl.: G06K 15/16, B41J 15/04

(54) **TEILBARE PAPIERTEILEREINRICHTUNG FÜR VORGEFALTETES ENDLOSPAPIER IN EINER NICHTMECHANISCHEN DRUCKEINRICHTUNG**
DIVISIBLE PAPER-DIVIDING DEVICE FOR PREFOLDED LISTING PAPER IN A NON-MECHANICAL PRINTER
DISPOSITIF DIVISIBLE DE DIVISION DE PAPIER POUR PAPIER SANS FIN PRE-PLIE DANS UNE IMPRIMANTE NON MECANIQUE

(30) Priorität: 05.04.1989 DE 3911025
(43) Veröffentlichungstag der Anmeldung: 22.01.1992
(73) Patentinhaber: Siemens Nixdorf Informationssysteme Aktiengesellschaft, 33102 Paderborn (DE)
(72) Erfinder: SCHMIDT, Ludwig, D-8000 München 71 (DE); RUMPEL, Peter, D-8152 Feldkirchen (DE)
(74) Vertreter: Fuchs, Franz-Josef, Dr.-Ing.
(86) Internationale Anmeldenummer: DE8900766
(87) Internationale Veröffentlichungsnummer: WO9012374

(56) Entgegenhaltungen:
- EP-A- 127 144
- EP-A- 0 189 124
- EP-A- 0 217 133
- EP-A- 0 280 036
- DE-A- 3 406 261
- FR-A- 2 552 541

## Beschreibung

Die Erfindung betrifft eine Papierteilereinrichtung gemäß dem Oberbegriff des Patentanspruches 1.

Bei Schnelldruckeinrichtungen wie sie z.B. in der Datentechnik verwendet werden, seien es nun nichtmechanische Schnelldruckeinrichtungen wie Laserprinter, Kopiergeräte oder ähnliches, ist es üblich als Aufzeichnungsträger vorgefaltetes Endlospapier, sogenanntes Laparellopapier zu verwenden. Das Papier wird dabei vorgefaltet als Stapel angeliefert und auf einer Papierablagefläche des Druckers abgelegt. Von dieser Papierablagefläche aus wird es dann über eine entsprechende motorische Vorschubeinrichtung dem Druckbereich der Druckeinrichtung zugeführt. Das vorgefaltete Papier weist am Rand Perforationen auf, die in die Vorschubeinrichtung der Druckeinrichtung eingreifen.

Beim Abziehen des Papiers vom Stapel kann es nun vorkommen, daß einzelne Schichten bzw. Blätter des Papierstapels aneinanderhaften bleiben, so daß sich die Papierbahn nicht vollständig streckt, was zu Störungen in der Papiertransporteinrichtung führen kann.

Eine Papierteilereinrichtung der eingangs genannten Art ist aus der DE-PS 34 06 261 bekannt.

Nachteilig bei dieser bekannten Papierteilereinrichtung ist ihre starre Anordnung. Dadurch wird das Einfädeln und Einlegen des Papieres kompliziert, weil es durch enge Kanäle geführt werden muß.

Aus der FR-A-2 552 541 ist bekannt, bei einem Transportwalzenpaar aus Andruckrolle und Transportrolle für auf einer Vorratsrolle aufgewickeltes Endlospapier eine der Walzen abschwenkbar auszugestalten, was zwangsläufig notwendig ist, wenn das Transportwalzenpaar unzugänglich angeordnet ist. Dieser Stand der Techniok betrifft einen Thermodrucker kleinerer Dimensionen.

Aufgabe der Erfindung ist es für Druckeinrichtungen der eingangs genannten Art eine Papierteilereinrichtung bereitzustellen, die ergonomisch günstig aufgebaut ist, so daß das Endlospapier leicht eingelegt werden kann.

Diese Aufgabe wird bei einer Papierteilereinrichtung der eingangs genannten Art gemäß dem kennzeichnenden Teil des ersten Patentanspruches gelöst.

Vorteilhafte Ausführungsformen der Erfindung sind in den Unteransprüchen gekennzeichnet.

Mit der erfindungsgemäßen Papierteilereinrichtung läßt sich das Endlospapier besonders leicht in die Druckeinrichtung einlegen. Dazu wird das erste Umlenkelement das am freien Ende einer Betätigungsschwinge angeordnet ist, über die Betätigungsschwinge abgeschwenkt und das Papier in einfacher Weise in den freiwerdenden Papierkanal eingelegt. Beim Hochschwenken der Betätigunasschwinge wird das Papier erfaßt und in den Bereich des zweiten Umlenkelementes gebracht. Damit ist das Papier vollständig durch die Papierteilereinrichtung durchgeführt und betriebssicher in die Druckeinrichtung eingelegt.

Bei einer vorteilhaften Ausführungsform der Erfindung weist die Betätigungsschwinge selbst Papierleitelement auf, die mit weiteren Papierelementen der Druckeinrichtung ein Einlegekanal für die Papierbahn bilden. Damit ist eine ergonomisch optimal ausgestaltete Einlegehilfe vorhanden, die das Einlegen der Papierbahn in die Druckeinrichtung wesentlich erleichtert.

Eine Ausführungsform der Erfindung ist in den Zeichnungen dargestellt und wird im folgenden beispielsweise näher beschrieben. Es zeigen
FIG 1 eine schematische Darstellung einer elektrofotografischen Druckeinrichtung,
FIG 2 eine Papierteilereinrichtung in Betriebslage (Position B) und in abgeschwenkter Position (Position A),
FIG 3 eine schematische Darstellung eines Teiles der Papiereinlegevorrichtung im Bereich der Umdruckstation,
FIG 4 eine schematische Darstellung einer Papierbremse im aktivierten Zustand mit geöffneten Traktorklappen,
FIG 5 eine schematische Darstellung der Papierbremse im deaktivierten Zustand bei geschlossenen Traktorklappen,
FIG 6 eine schematische Frontansicht einer Partikelfalle,
FIG 7 eine schematische Seitendarstellung einer Partikelfalle im Eingangsbereich des Papierführungskanales,

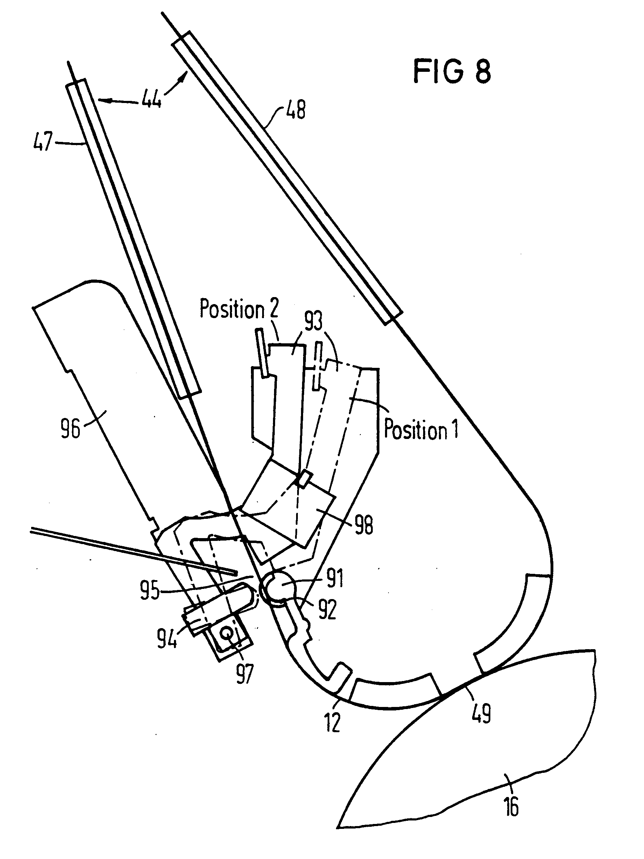

FIG 8 eine schematische Schnittdarstellung der Umdruckstation mit integrierter Partikelfalle,
FIG 9 eine schematische Schnittdarstellung der Umdruckstation mit geöffneter Partikelfalle und
FIG 10 eine schematische Darstellung einer Papierzentriereinrichtung im Eingangsbereich der Umdruckstation.

Eine nach dem Prinzip der Elektrofotografie arbeitenden Druckeinrichtung weist einen Vorratstisch 10 zur Aufnahme eines Vorratsstapels 11 aus vorgefaltetem Endlospapier 12 auf. Das Endlospapier wird über eine Papierteilereinrichtung 13 und einer mit Papierleitelementen versehenen, abschwenkbaren Betätigungsschwinge 14 dem eigentlichen elektrofotografischen Druckaggregat 15 zugeführt. Dieses Druckaggregat 15 weist eine, an eine Fotoleitertrommel 16 an- und abschwenkbare Umdruckstation 17 auf, sowie um die Fotoleitertrommel 16 angeordnete, für den elektrofotografischen Prozeß notwendige Einrichtungen.

Zur Erzeugung eines Tonerbildes auf dem Endlospapier wird in üblicher Weise die mit Hilfe einer Ladeeinrichtung 18 aufgeladene Fotoleitertrommel 16 zeichenabhängig über einen LED-Zeichengenerator 19 entladen, und das so erzeugte Ladungsbild in einer Entwicklerstation 20 mit einem Entwicklergemisch aus Toner- und Trägerteilchen eingefärbt. Das Tonerbild wird dann in der Umdruckstation 17 auf das Endlospapier 12 übertragen. Nach dem Umdruck wird die Fotoleitertrommel 16 über eine Entladestation 21 entladen und in einer Reinigungsstation 22 gereinigt und erneut über die Ladeeinrichtung 18 aufgeladen.

Anstelle des beschriebenen elektrofotografischen Prozesses ist es auch möglich zur Erzeugung des Tonerbildes auf dem Endlospapier 12 z.B. einen elektrostatischen Prozeß oder einen magnetischen Prozeß oder sogar einen Tintenkamm zu verwenden, der unmittelbar auf das Endlospapier Tinte aufbringt.

Die mit einem Tonerbild versehene Papierbahn 12 wird dann in einer Fixierstation 23 chemisch oder durch Wärme fixiert und auf einem Ablagetisch 24 abgelegt. Bei dem dargestellten Ausführungsbeispiel der Druckeinrichtung ist der Ablagetisch 24 über einen Schwenkhebel 25 zur Erleichterung der Entnahme des bedruckten Papierstapels 26 ausschwenkbar ausgestaltet.

Wird die Druckeinrichtung z.B. mit einer weiteren Druckeinrichtung gekoppelt um z.B. Vor- oder Rückseitendruck zu ermöglichen, kann die Papierbahn 12 auch über externe Papierzuführungskanäle 27 der Papierteilereinrichtung 13 unmittelbar zugeführt werden. Weiterhin ist es möglich als Vorratsstapel einen externen Endlosvorratsstapel 28 zu verwenden. Zur Zuführung der Papierbahn können dabei gesonderte Papierzuführungselemente mit Papierwalzen 29 notwendig sein.

Um das Eindringen von die Fotoleitertrommel 16 beschädigenden Partikeln wie Büroklammern oder andere Metallteile in das Druckaggregat 15 zu verhindern, ist entweder am Eingangsbereich zur Umdruckstation 17 oder in der Umdruckstation integriert eine Partikelfalle 30/1, 30/2 angeordnet. Die Druckeinrichtung weist weiterhin eine über die Betätigungsschwinge 14 aktivierbare Papiereinlegevorrichtung mit zugeordneter Papierbremse 31 auf.

Die genannten Vorrichtungen der Druckeinrichtung werden nun im einzelnen beschrieben:

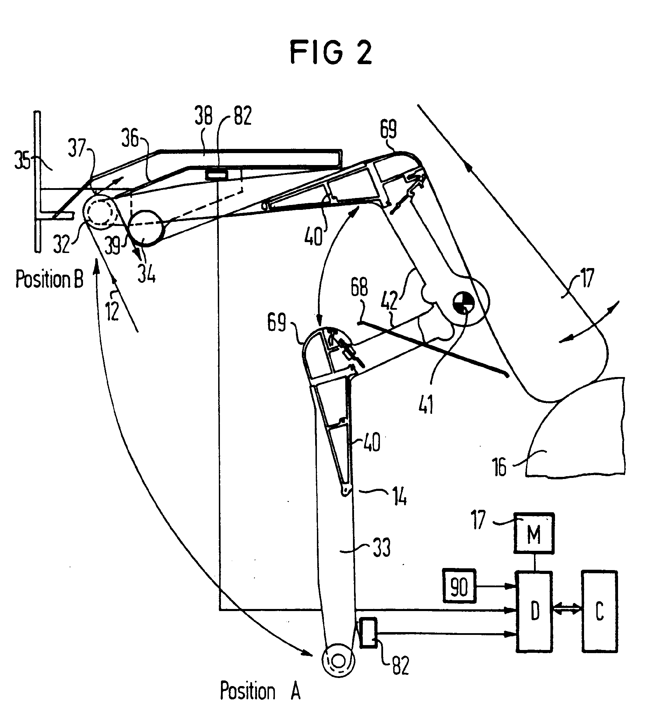

### Papierteilereinrichtung (FIG 2)

Um aneinanderhalftende Papierlagen der vom Stapel 11 abgezogenen Endlospapierbahn 12 voneinander zu trennen ist am Eingang des Zuführungskanales zum Druckaggregrat 15, oberhalb des Papierstapels 11 eine Papierteilereinrichtung 13 angeordnet. Diese Papierteilereinrichtung enthält ein erstes Umlenkelement in Form einer drehbar gelagerten Papierwalze 32, die zwischen zwei Seitenteilen 33 der Betätigungsschwinge 14 an deren freien Schwenkende angeordnet ist. Weiterhin enthält sie ein zweites Umlenkelement in Form einer motorisch angetriebenen Papierwalze 34 die ortsfest auf zwei festen mit dem Gehäuse der Druckeinrichtung verbundenen Trägerelementen 35 angeordnet ist. Die motorisch angetriebene Papierwalze 34 befindet sich dabei im Schwenkbereich der Betätigungsschwinge 14. Oberhalb des ersten Umlenkelementes (Papierwalze 32) ist in einem einen Durchlaß für die Papierbahn bildenden Abstand ein Papierleitelement 36 angeordnet. Das Papierleitelement ist so ausgebildet, daß es zusammen mit anderen Blechelementen einen Auffangkorb 38 für das erste abgeschälte Faltblatt der Papierbahn bildet.

In Betriebslage (Position B), d.h. bei hochgeschwenkter Betätigungsschwinge 14 wird die Endlospapierbahn 12 zunächst in einer ersten Umlenkrichtung über das erste Umlenkelement 32 geführt.

Eine in Bezug auf die Papierwalze 32 an der Außenseite der Papierbahn anheftende erste Papierlage 37 wird mit ihrer Falzkante vom Papierleitelement 36 abgeschält und dringt in den Auffangkorb 38 ein. Beim Weitertransport wird die erste Papierlage 37 aufgefächert. Eine in Bezug auf die Papierwalze 32 an der Innenseite anheftende zweite Papierlage wird von der Papierbahn 12 um die Papierwalze 32 mit der ersten Umlenkrichtung geführt und löst sich dann durch die Umlenkung am zweiten Umlenkelementes (Papierwalze 34) von diesem ab und fällt nach unten. Dies führt ebenfalls zu einem Auffächern der Papierlage, so daß für den Weitertransport über ein zwischen den Seitenteilen 33 der Betätigungsschwinge 17 angeordnetes Papierleitelement 40 eine auseinandergezogene entfaltete Endlospapierbahn 12 zur Verfügung steht.

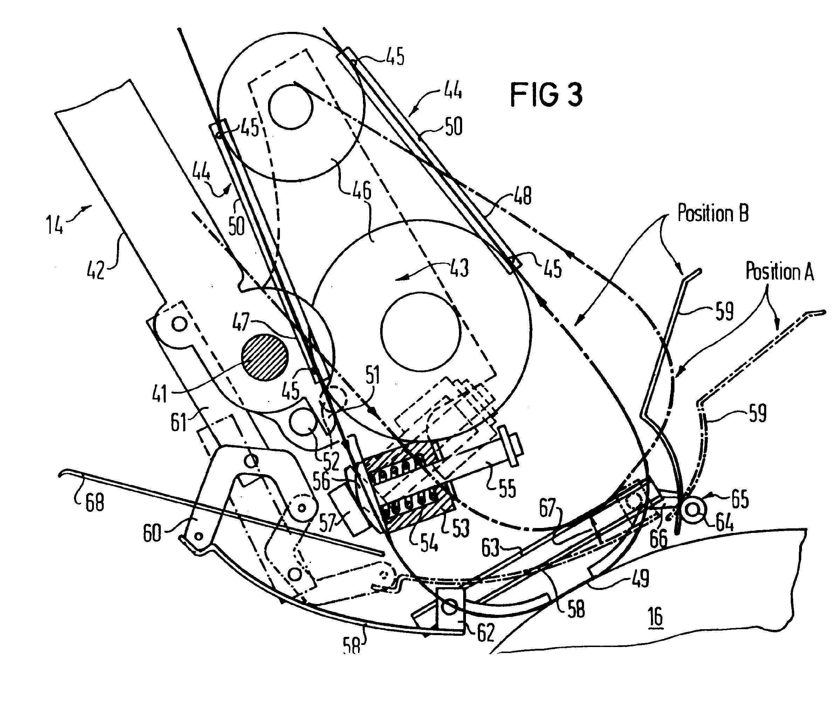

### Papiereinlegevorrichtung (FIG 2, 3)

Die Betätigungsschwinge 14 bildet nicht nur einen Bestandteil einer Papierteilereinrichtung 13 sondern ist ein wesentliches Funktionselement einer Papiereinlegevorrichtung zum Einlegen des Endlospapieres 12 in die Druckeinrichtung. Um das Einlegen des Endlospapieres zu ermöglichen ist die Betätigungsschwinge 14 mechanisch mit der Umdruckstation 17 derart gekoppelt, daß beim Verschwenken der Betätigungsschwinge 14 aus einem Ladeposition A in eine Betriebsposition B die Umdruckstation 17 an die Fotoleitertrommel 16 anschwenkt bzw. bei einem Verschwenken aus Position B in die Position A abschwenkt.

Zu diesem Zwecke ist die Betätigungsschwinge 14 im Bereich der Umdruckstation auf einer gestellfesten Achse 41 über Halteelemente 42 drehbar gelagert. Die Umdruckstation selbst ist ebenfalls über einen Gußträger 43, der hier nur schematisch dargestellt ist, schwenkbar auf der gestellfesten Achse 41 gelagert. Die Umdruckstation enthält dabei einen Traktorantrieb mit zwei seitlich in die Randperforationen des Endlospapieres 12 eingreifenden Traktorbändern 44 mit darauf angeordneten Transportnippeln 45. Geführt und gelagert sind die Traktorbänder 44 auf zwei über Achsen miteinander verbundenen Antriebsräderpaaren 46, wobei der Antrieb der Traktoren über einen Motor M (FIG 2) erfolgt, der mit dem großen Antriebsräderpaar gekoppelt ist. Beim Transport des Endlospapieres 12 befindet sich das Endlospapier über seine Perforationslöcher 9 in Transportrichtung des Papieres gesehen sowohl vor 47 als auch nach 48 dem Umdruckbereich 49 der Umdruckstation in Eingriff mit den Traktorbändern 44. Als Sicherungs- und Führungselemente für das Endlospapier sind vier Transportklappen 50 vorgesehen, die das Endlospapier im Bereich der Perforationslöcher 9 gegen die Traktorbänder 44 drücken.

Bewegt wird die Umdruckstation 17 über einen im Lagerbereich der Betätigungsschwinge 14 angeordneten Mitnehmer 51, der mit einem Anschlagstift 52 auf dem Gußträger 43 (Rahmen) der Umdruckstation 17 zusammenwirkt. Am Gußträger 43 befestigt ist eine Hülse 53 mit einer darin enthaltenen Feder 54 und einem in der Hülse 53 geführten Federbolzen 55. Der Federbolzen 55 liegt mit seinem Kopf 56 auf einem gestellfesten Anschlag 57 auf und rollt bei der Bewegung der Umdruckstation auf diesem ab. Das An- und Abschwenken der Umdruckstation erfolgt somit mit oder entgegen der Federkraft der Feder 54. Beim Verschwenken der Betätigungsschwinge 14 aus der Position B in die Position A unterstützt der Federbolzen 55 die Abschwenkbewegung der Umdruckstation, wobei der Anschlagstift 52 bis zu einem bestimmten Schwenkwinkel am Mitnehmer 51 anliegt. Der Schwenkwinkel der Umdruckstation ist dabei durch die Länge des Federbolzens 55 mit einem darauf angeordneten Anschlag begrenzt.

Um beim Abschwenken der Umdruckstation mit eingelegter Papierbahn das Tonerbild auf der Papierbahn nicht zu verwischen, ist die Umdruckstation 17 bezüglich ihres Drehpunktes so gelagert, daß das im Umdruckbereich 49 über die Umdruckstation 17 geführte Papier sofort von der Fotoleitertrommel abhebt, ohne dort zu schleifen.

Um die Fotoleitertrommel 16 im abgeschwenkten Zustand der Umdruckstation zu schützen und um insbesondere zum Einführen des Endlospapieres 12 einen erweiterten Papierkanal bilden zu können, sind im Bereich der Umdruckstation schwenkbare Papierleitelemente 58 und 59 angeordnet. Das Papierleitelement 58 ist über einen Kniehebel 60 an einem auf der Betätigungsschwinge 14 gelagerten Führungsstück 61 angelenkt, wobei ein Ende des Papierleitelementes 58 über einen Gleitstift 62 in einer gestellfesten Schiene 63 geführt ist.

Das dem Umdruckbereich 49 nachgeordnete Papierleitelement 59 wiederum ist über ein Lager 64 schwenkbar gestellfest gelagert. Es weist im Bereich des Lagers 64 eine Feder 65 auf, die das Papierleitelement 59 in die dargestellte geschlossene Position B drückt. Weiterhin ist das Papierleitelement 59 mit einem Ansatzstück 66 verbunden, das mit dem Gleitstift 62 zusammenwirkt. Der Gleitstift 62 befindet sich dabei im Schwenkbereich des Ansatzstückes 66 und drückt das Papierleitblech 59 in der Position A nach außen. Bei einer hier nicht dargestellten Ausführungsform stützt sich das Papierleitelement 59 auf einem Noppen der Umdruckstation 17 unter der Wirkung der Feder 65 ab und wird über diesen Noppen abgeschwenkt.

In der Betriebsposition (Position B) mit hochgeschwenkter Betätigungsschwinge 14 ist die Umdruckstation 17 an den Fotoleiter 16 angeschwenkt und die Papierleitelemente 58 und 59 geben den Umdruckbereich 49 frei. Wird die Betätigungsschwinge 14 in der Position A verschwenkt, wird das Papierleitblech 58 auf der Schiene 63 in den Bereich zwischen Fotoleitertrommel und Umdruckstation geführt und es öffnet sich zwischen Umdruckstation 17 und Papierelement 58 ein erweiterter Papierführungskanal 67. Das Papierleitelement 58 schützt dabei die Fotoleitertrommel 16 im Umdruckbereich 49 vor Lichteintritt und Beschädigung. Fortgesetzt wird der Papierführungskanal 67 in Papiertransportrichtung durch das abgeschwenkte Papierleitelement 59, wobei sich die Papierleitelemente 58, 59 teilweise überlappen.

In Papiertransportrichtung vor den Papierleitelementen 58, 59 ist ein Papiereinführungsblech 68 fest angeordnet, das mit einem runden Papierführungsbereich 69 der Betätigungsschwinge 14 zusammenwirkt. Der Papierführungsbereich 69 dient als Papierumlenkelement für die Papierbahn.

In der Position A der Betätigungsschwinge 14 kann nunmehr das Endlospapier 12 problemlos durch den Papierführungskanal 67 über den Papierführungsbereich 69, das Papiereinführungsblech 68 und die Papierleitelement 58 und 59 um die Umdruckstation herumgeführt und in das abtriebsseitige Traktorband 48 eingelegt werden.

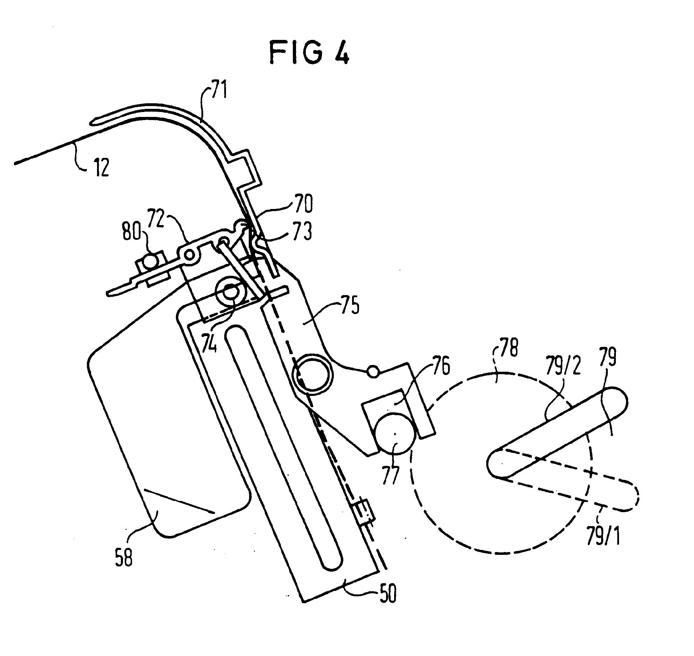

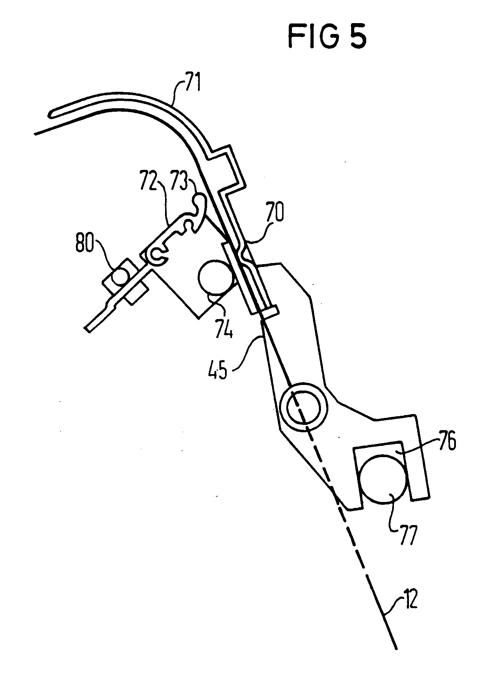

### Papierbremse (FIG 4, 5)

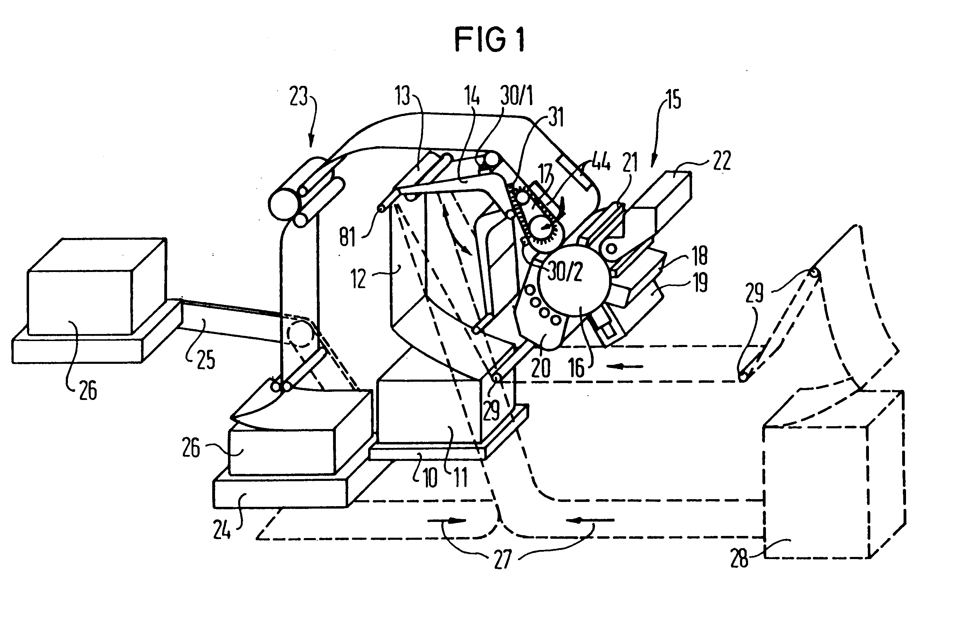

Im Einlaufbereich des Papierführungskanales für die Umdruckstation 17 ist eine Papierbremse 31 (FIG 1) angeordnet. Diese Papierbremse enthält ein Umlenkelement 70 in Form einer Blechrippe, das am Eingang der Umdruckstation 17 an der Umdruckstation befestigt ist und Bestandteil eines durchgehenden Umlenkbleches 71 ist. Das Umlenkelement 70 wirkt mit einem an- und abschwenkbaren Gegenelement 72 zusammen, das im Papierführungsbereich 69 auf der Betätigungsschwinge 14 angeordnet ist. Das Gegenelement 72 weist eine Bremsnase 73 auf, sowie einen Anschlagstift 74 der mit einem an der Umdruckstation 17 gelagerten Betätigungshebel 75 zusammenwirkt. Der Betätigungshebel 75 wiederum ist über eine Ausnehmung 76 mit einem Stift 77 gekoppelt, der über ein Getriebe 78 mit einem Schalthebel 79 zum Schliessen der Traktorklappen 50 des Zuführungsbereiches der Umdruckstation zusammenwirkt. Der Schalthebel 79 ist weiterhin über das Getriebe 78 und entsprechende hier nicht dargestellte Rastnasen mit den Traktorklappen 50 gekoppelt. Im Betriebszustand liegen die Traktorklappen 50 unter der Wirkung von hier nicht dargestellten, im Scharnierbereich der Traktorklappen angeordneten Andruckfedern auf der Papierbahn auf. Werden sie abgeschwenkt, geschieht dies entgegen der Wirkung dieser Andruckfedern, wobei nach Überwindung eines Totpunktes der Federn die Traktorklappen 50 im geöffneten Zustand verbleiben.

Bei geöffneter Traktorklappe 50 befindet sich der Schalthebel 79 in der Position 79/1. Über den Stift 77 ist der Betätigungshebel 75 in ausgeschwenkter Position und drückt das Gegenelement 72 mit der Bremsnase 73 in Betriebsposition. Die Betätigungsschwinge 14 befindet sich dabei in der Position B, d.h. in hochgeschwenkter Lage. Damit ist die Papierbremse aktiviert und das Endlospapier 12 wird zwischen der Bremsnase 73 und der Blechrippe umgelenkt und dadurch gebremst. Die Bremsnase 73 ist Bestandteil des Gegenelementes 72, das aus einem sich über die Breite des Endlospapieres 12 erstreckenden Profilstück besteht.

Zum Schließen der beiden im Eingangsbereich der Umdruckstation angeordneten Traktorklappen 50 wird der Schalthebel 79 in die Position 79/2 gebracht, wodurch die Klappen 50 über das Getriebe 78 über den Totpunkt ihrer Federn schwenken und die Federn die Klappen schließen. Gleichzeitig wird der Betätigungshebel 75 über den Stift 77 zurückgeschwenkt und unter der Wirkung einer am Drehpunkt des Gegenelementes 72 angeordneten Feder 80 schwenkt das Gegenelement 72 mit der Bremsnase 73 zurück und kommt außer Eingriff mit dem Endlospapier 12 und gibt dieses frei. Das Endlospapier 12 kann nun im Druckbetrieb ohne Bremswirkung frei durch die Papierbremse 31 geführt werden.

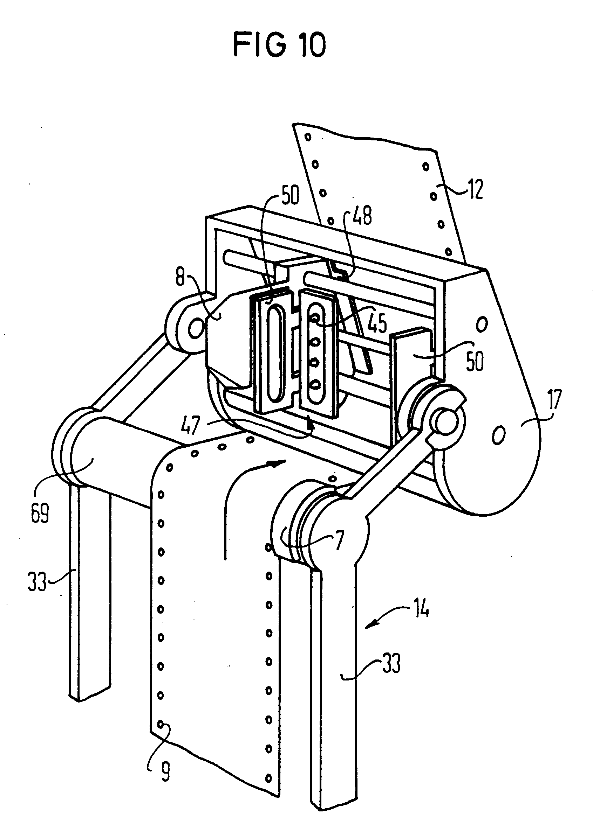

Die gesamte Papiereinlegevorrichtung funktioniert wie folgt:
Nach Einlegen des Papierstapels 11 auf den Vorratstisch 12 wird die Betätigungsschwinge 14 über einen Handgriff 81 in die Position A verschwenkt. Diese Position A wird über einen Schalter 82 (FIG 2) abgetastet. Die Umdruckstation 17 ist abgeschwenkt und die Papierleitelemente 58 und 59 decken die Fotoleitertrommel 16 ab und öffnen einen weiten Papiereinlegekanal 67. Das Papier kann über diesen Papiereinlegekanal durch die Druckstation durchgeführt und in die abtriebsseitigen Traktorenbänder 48 eingehängt werden. Danach werden die Transportklappen 50 der abtriebsseitigen Traktorenbänder 48 geschlossen. Sollten die Transportklappen 50 der im Papiereinlaufbereiches der Umdruckstation 17 angeordneten Traktorbänder 47 geschlossen sein, werden sie geöffnet. Dadurch befindet sich der Schalthebel der Klappenbetätigung 79 in der Position 79/2. Der Betätigungshebel 75 der Papierbremse ist ausgeschwenkt. Diese Position ist in der FIG 10 dargestellt.

Um lagerichtig in die Transportnippel 45 der Traktorbänder 47 vor der Umdruckstation 17 einfädeln zu können, muß das Endlospapier 12 vor dem Schließen der Ladeschwinge 14 breitenzentriert werden. Das bedeutet die Papierbahn 12 muß auf der Betätigungsschwinge 14 so ausgerichtet werden, daß die Perforationslöcher 9 des Endlospapieres 12 mit den eingangsseitigen Traktorbändern 47 fluchten. Dies ist keineswegs selbstverständlich, da je nach Lage des Stapels 11 die Papierbahn 12 zu weit vorne oder zu weit hinten auf dem Vorratstisch liegen kann. Um diese Zentriertung zu erreichen ist eine Zentriereinrichtung im Eingangsbereich der Umdruckstation angeordnet. Sie enthält einen mit dem eingangsseitigen Traktorantrieb 47 breitenverschieblich gekoppelten, abgewinkelten Blechlappen 8. Dieser dient in Transportrichtung des Endlospapieres 12 gesehen als Zentriertrichter für das Endlospapier und kann zusammen mit dem Traktorantrieb 47 der Breite des Endlospapieres 12 angepaßt werden. Weiterhin ist auf dem Umlenkbereich 69 der Befestigungsschwinge 14 ein fester rechter Führungsanschlag 7 für das Endlospapier 12 angeordnet.

Wird die Betätigungsschwinge 14 geschlossen, erfolgt bei einem langsamen Kriechgangbetrieb des Endlospapieres 12 zunächst eine Grobzentrierung über den rechten vorderen Anschlag 7. Im Zuge des Hochklappens der Ladeschwinge 14 gerät die Papierbahn in den Fangbereich der hinteren Zentrierung, nämlich den Fangbereich des Blechlappens 8. Mit Hilfe des langsam laufenden Papierantriebes zentriert sich die Endlospapierbahn 12 zwischen dem vorderen festen Anschlag 7 und dem hinteren Anschlag 8, so daß die Perforationslöcher 9 mit den Traktorbändern 47 fluchten.

Dann erfolgt das eigentliche Einfädeln der Perforationslöcher 9 in die Transportnippel 45.

Wie beschrieben, wurde schon beim Abschwenken der Betätigungsschwinge 14 in Richtung Betriebslage B über einen Zeitgeber, der z.B. in der Druckersteuerung C, D angeordnet sein kann, der Traktorantrieb im Kriechgang aktiviert. Dieser Zeitgeber kann z.B. als Zähler ausgebildet sein.

Beim Hochschwenken wird zunächst über den Kniehebel 60 und das Führungsstück 61 das Papierleitelement 58 aus dem Umdruckbereich 49 geschwenkt. Wird dann die Betätigungsschwinge 14 weiter in Richtung Position B gebracht, tritt wie beschrieben die Zentriereinrichtung in Funktion und der Mitnehmer 51 kommt in Kontakt mit dem Anschlagstift 52 und bewegt dadurch die Umdruckstation 17 vollends in ihrer Betriebslage (Position B FIG 3). Kurz vor dem Schließen einer an der Betätigungsschwinge 14 angebrachten Verriegelung in der Position B wird die Papierbremse wirksam.

Die abtriebsseitigen Traktorbänder 44 ziehen nunmehr das Endlospapier entgegen der Wirkung der Papierbremse 31 bis es straff um die Umdruckstation 17 gespannt ist. Dadurch kommen die Transportnippel 45 der eingangsseitig angeordneten Traktorbänder 47 in Eingriff mit den Perforationslochungen 9 des Endlospapieres 12.

Ist die Betätigungsschwinge 14 geschlossen, wird diese Position über einen weiteren Schalter 82 abgetastet und der Antriebsteuerung D mitgeteilt. Die Papierbahn ist nunmehr durch die Papierteilereinrichtung 16 hindurchgeführt.

Nach Beendigung der Kriechgangphase werden die Transportklappen 50 über den Schalthebel 79 geschlossen. Die Papierbremse 81 wird in der beschriebenen Weise deaktiviert und das Endlospapier 12 freigegeben. Damit ist das Papier im Umdruckbereich vollständig eingelegt und kann nun durch weiteren Transport automatisch bis zur Fixierstation 73 bzw. zum Ablagetisch 24 durchgefädelt werden.

Anstelle der halbautomatischen Durchfädelung ist es auch möglich eine vollautomatische Durchfädelung dadurch zu erreichen, daß die Betätigung des Schalthebels 79 über einen Drehmagneten erfolgt. Dieser Drehmagnet kann im Bereich des Getriebes 78 angeordnet sein und ist mit der Steuerung der Druckeinrichtung und mit den Schaltern 82 verbunden.

Der Drehmagnet kann dabei so geschaltet sein, daß er automatisch nach Ende der Kriechphase beim Einfädeln der Papierbahn 12 die Transportklappen 50 schließt.

Das Öffnen der Einlegevorrichtung bei eingelegter Papierbahn geschieht in umgekehrter Reihenfolge. Zunächst wird der Schalthebel 79 in die Position Klappe auf 79/2 gebracht und dadurch die Papierbremse 31 aktiviert. Dann werden die im Eingangsbereich der Umdruckstation 17 angeordneten Transportklappen 50 geöffnet und über den Handgriff 81 nach Lösen der Verriegelung die Betätigungsschwinge 14 abgeschwenkt. Damit öffnet sich der Papierführungskanal 67, die Umdruckstation wird abgeschwenkt und die im Auslaufbereich der Umdruckstation angeordneten Transportklappen 50 können geöffnet werden.

Durch die Anordnung eines Drehmagneten läßt sich auch dieser Ablauf automatisieren, wobei mit Druckerstop die Verriegelung der Transportklappen 50 freigegeben und die Papierbremse 31 in Funktion gebracht wird. Sodann werden die im Eingangsbereich 47 der Umdruckstation 17 angeordneten Transportklappen 50 geöffnet, die Betätigungsschwinge 14 abgeschwenkt und die im Ausgangsbereich 48 Umdruckstation angeordneter Transportklappen 50 geöffnet.

Anstelle der zweigeteilten mechanischen Papierbremse ist es auch möglich, eine mit Unterdruck arbeitende Papierbremse anzuordnen bei der das Endlospapier gegen eine Ansaugplatte angesaugt und dadurch gebremst wird.

Bei der zweigeteilten Papierbremse mit einem aus einer Blechrippe bestehenden Umlenkelement 71 und einem auf der Betätigungsschwinge 14 angeordneten Gegenelement 72 wird automatisch die Bremswirkung von der verwendeten Papierdicke des Endlospapieres 12 angepaßt. So darf bei dünnem Papier die Bremskraft nicht zu groß sein, um z.B. das Papier nicht zu zerreißen oder zu strecken. Durch die geringere Papierdicke wird das Papier in der Papierbremse weniger umgelenkt und erfährt dadurch eine geringere Bremskraft. Dickeres Papier wird stärker umgelenkt und demgemäß stärker abgebremst.

Bei Unterdruck betätigten Papierbremsen ist hierzu eine gesonderte Anpassung des Unterdruckes an die Papierstärken bzw. das Papiergewicht notwendig.

Die Bremskraft einer mit Umlenkelementen versehenen Papierbremse, sei sie nun einteilig oder zweigeteilt ausgeführt, hängt stark vom Umlenkradius am Umlenkelement 70 und am Gegenelement 72 ab und läßt sich über die Radien einstellen. Die Grunddimensionierung der Papierbremse hängt dabei unter anderem von der Art des verwendeten Aufzeichnungsträgers und der Art der Transportmittel und des Antriebes in der Umdruckstation ab.

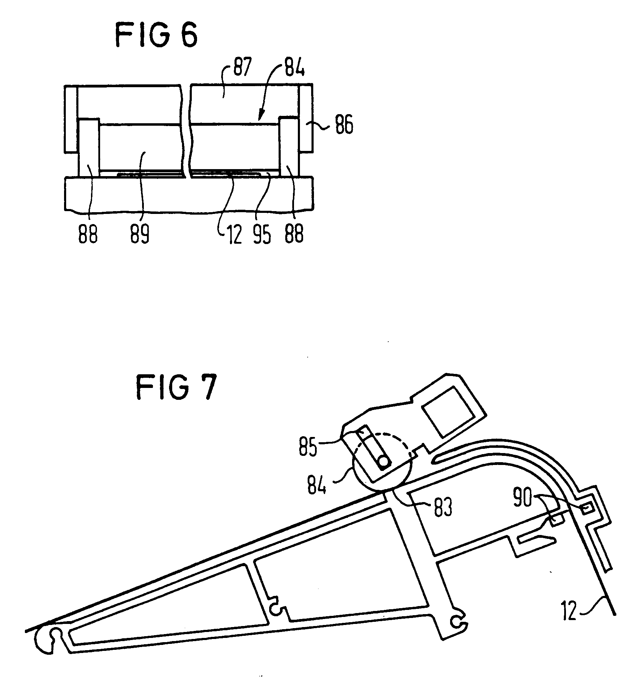

### Partikelfalle (FIG 6, 7)

Wie eingangs ausgeführt, befindet sich im Eingangsbereich der Umdruckstation 17 eine Partikelfalle die dazu dient das Eindringen von Metallelementen wie Büroklammern oder dergleichen in den Bereich der Umdruckstation zu verhindern. Derartige Metallelemente würden zu einer Beschädigung des Fotoleiters führen. Zu diesem Zwecke ist über einen Papiersattel der Betätigungsschwinge 14 kurz vor dem Umlenkbereich 69 eine runde Metallstange 84 in Schlitzen 85 einer Halterung geführt. Die Halterung besteht dabei aus einer Querstange 87, die an dem Gehäuse der Druckeinrichtung befestigt ist mit seitlichen Haltelappen 86. Die Metallstange 84 wiederum weist zwei seitliche runde Führungsbereiche 88 mit großem Durchmesser und einen sich quer über die Papierbahn erstreckenden Fangbereich 89 mit kleinerem Durchmesser auf. Dadurch ergibt sich zwischen dem Papiersattel 83 und der Querstange 87 im Fangbereich 89 ein Passierschlitz für das Papier 12.

Ein in den Papierschlitz eingedrungener Metallgegenstand verkeilt sich im Passierschlitz 95 und führt zu einem Riß der Papierbahn. Dieses Reißen der Papierbahn 12 wird über entsprechende Detektoren z.B. in Form einer im Umlenkbereich 69 angeordneten Lichtschranke 90 erkannt und der Papiertransport gestoppt. Zum Entfernen des Partikels kann die Querstange 87 in den Schlitzen 85 der seitlichen Halterung 86 nach oben bewegt werden. Die Halterung 86 mit den Schlitzen 85 ist über die Querstange 87 in einem derartigen Winkel zur Papierbahn angeordnet, daß der Keileffekt beim Eindringen von Metallpartikeln unterstützt wird. Darunter ist zu verstehen, daß es sicher zu einem Verkeilen des abzufangenden Metallstückes mit nachfolgendem Papierriß kommt, andererseits aber sichergestellt ist, daß das Metallstück wieder in leichter Weise durch Anheben der Metallstange 84 entfernt werden kann.

Bei einem bevorzugten Ausführungsbeispiel der Partikelfalle gemäß den FIG 4 und 5 ist die Partikelfalle auf der Umdruckstation 17 zwischen den eingangs- und ausgangsseitigen Papiertraktoren 47, 48 in Papiertransportrichtung vor der Umdruckstelle 49 angeordnet. Damit kann sich bei einer Bewegung des Papieres sowohl in Vorwärts- als auch in Rückwärtsrichtung das Papier nicht in dem Passierschlitz der Partikelfalle verklemmen, da das Papier immer zwischen den Traktorbändern 47 und 48 eingespannt ist.

Die Partikelfalle selbst enthält ein im Papierkanal der Umdruckstation angeordnetes Umlenkprofil 91, das sich über die Breite der Umdruckstation 17 erstreckt und auf dem das Endlospapier mit seiner unbetonerten Rückseite gleitet. Auf dem Umlenkprofil 91 sind an den seitlichen Enden Abstandsbleche 92 befestigt. Damit ergibt sich eine Struktur für das Umlenkprofil 91, die der Metallstange 84 einschließlich der Führungsbereiche 88 des Ausführungsbeispieles der FIG 2 entspricht.

An das Umlenkprofil über einen Hebel 93 anschwenkbar ist ein Partikelbalken 94 in Form einer Metallstange, wobei im angeschwenkten Zustand der Partikelbalken 94 auf den Abstandsblechen 92 aufliegt und zwischen Umlenkprofil 91 mit darauf geführtem Endlospapier 12 einen Passierschlitz 95 (Kalibrierspalt) zum Abfangen der Partikeln bildet.

Im Querschnitt ist der Kalibrierspalt 95 im Einlaufbereich des Papieres trichterförmig gestaltet. Damit ist sichergestellt, daß es zu einem Verkeilen der abzufangenden Metallstücke mit nachfolgendem Papieres kommt.

Der Hebel 93 ist auf einem Lagerbock 96 für das Schwenklager 41 der Betätigungsschwinge 14 gelagert und zwar um einen Drehpunkt 97 schwenkbar. Weiterhin weist er eine Rastvorrichtung 98 auf, die es ermöglicht, den Hebel 93 in zwei Positionen zu verrasten. Diese Rastpositionen werden über einen Mikroschalter 99 abgetastet. Diese Rastpositionen sind: eine erste Position (Position 1), bei der der Partikelbalken 94 an das Umlenkprofil 91 angeschwenkt und damit die Partikelfalle geschlossen ist und eine zweite Position (Position 2), bei der der Partikelbalken 94 von dem Umlenkprofil 91 abgeschwenkt ist. Die abgeschwenkte Position 2 ist notwendig, wenn mit der Druckeinrichtung auf dem Endlospapier 12 angeordnete Etiketten bedruckt werden sollen, die das Papier deutlich verstärken. Würde die Partikelfalle nicht abgeschwenkt, würden sich die Etiketten im Papierschlitz verklemmen. Die Positionen des Hebels 93 werden über einen Mikroschalter 99 erkannt und an die Gerätesteuerung der Druckeinrichtung übermittelt. Die Gerätesteuerung überwacht die Funktionszustände der Partikalfalle.

In beiden Hebelpositionen 1 und 2 der FIG 4 befindet sich die Umdruckstation 17 in Betriebslage, d.h. sie ist an die Fotoleitertrommel 16 angeschwenkt und die Betätigungsschwinge 14 verrastet.

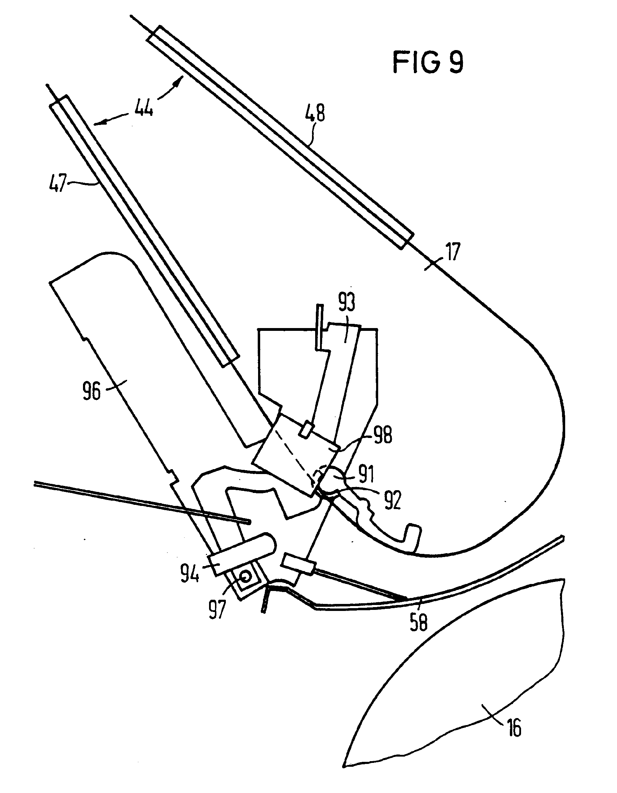

Verkeilt sich in dieser Betriebslage im Kalibrierspalt 95 (Passierschlitz) ein Metallstück, so reißt die Papierbahn 12 und dieser Riß wird über die Lichtschranke 90 erkannt und der Papiertransport gestoppt. Zum Entfernen der Partikeln wird entsprechend der FIG 9 über die Betätigungsschwinge 14 die Umdruckstation 17 abgeschwenkt, dadurch schwenkt das Papierleitelement 58 in den Papiertransportkanal und schützt die Fotoleitertrommel 16. Aus dem Kalibrierspalt fallende Partikeln können die Fotoleitertrommel 16 nicht beschädigen.

Die gesamte Steuerung des Einfädelvorganges und die Überwachung der einzelnen Elemente der Papiereinlegevorrichtung erfolgt über eine übliche mikroprozessorgesteuerte Meßüberwachungseinrichtung D (FIG 2). Diese Überwachungseinrichtung D erfaßt die Schaltzustände der Schalter 82, einer Lichtschranke 90 und steuert die Antriebsmotoren M der Umdruckstation 17. Die Überwachungseinrichtung D ist Bestandteil der Gerätesteuerung C, die z.B. entsprechend der US-PS 4 593 407 ausgebildet sein kann.

### Bezugszeichenliste

- 7: fester Anschlag
- 8: Zentrierlappen, Blechlappen
- 9: Perforationsloch
- 10: Vorratstisch
- 11: Stapel, Vorratsstapel
- 12: Endlospapier, Papierbahn, Aufzeichnungsträger
- 13: Papierteilereinrichtung
- 14: Betätigungsschwinge
- 15: elektrofotografisches Druckaggregat
- 16: Fotoleitertrommel
- 17: Umdruckstation
- 18: Ladeeinrichtung
- 19: Zeichengenerator
- 20: Entwicklerstation
- 21: Entladestation
- 22: Reinigungsstation
- 23: Fixierstation
- 24: Ablagetisch
- 25: Schwenkhebel
- 26: bedruckte Papierstapel
- 27: externe Papierzuführungskanäle
- 28: externer Vorratsstapel
- 29: gesonderte Papierführungselemente (Walzen)
- 30/1: Partikelfalle im Eingangsbereich der Umdruckstation angeordnet
- 30/2: Partikelfalle in der Umdruckstation integriert
- 31: Papierbremse
- 32: Papierwalze
- 33: Seitenteile
- 34: motorisch angetriebene Papierwalze
- 35: Trägerelemente
- 36: Papierleitelemente
- 37: erste Papierlage
- 38: Auffangkorb
- 39: zweite Papierlage
- 40: Papierleitelemente
- 41: Achse
- 42: Halteelemente
- 43: Gußträger
- 44: Traktorband
- 45: Transportnippel
- 46: Antriebsräder
- 47: Traktorband (Papiereinlauf) vor der Umdruckstation
- 48: Traktorband (Papierauslauf) nach der Umdruckstation
- 49: Umdruckbereich
- 50: Transportklappen, Traktorklappen
- 51: Mitnehmer
- 52: Anschlagstift
- 53: Führung, Hülse
- 54: Federn
- 55: Federbolzen
- 56: Kopf des Federbolzens
- 57: Anschlag
- 58: Papierleitelemente (eingangsseitig)
- 59: Papierleitelemente (ausgangsseitig)
- 60: Kniehebel
- 61: Führungsstück
- 62: Gleitstift
- 63: Schiene
- 64: Lager
- 65: Feder
- 66: Ansatzstück
- 67: erweiterter Papierführungskanal
- 68: Papierführungsblech
- 69: Papierführungsbereich (Umlenkbereich)
- 70: Umlenkhebel, Blechrippen
- 71: Umlenkblech
- 72: Gegenelement
- 73: Bremsnase
- 74: Anschlagstift
- 75: Betätigungshebel, Kupplungseinrichtung
- 76: Ausnehmung
- 77: Stift
- 78: Getriebe
- 79: Schalthebel
- 79/1: Schalthebelposition Klappe offen
- 79/2: Schalthebelposition Klappe zu
- 80: Feder, Gegenelement
- 81: Handgriff
- 82: Schalter, elektrische Abtasteinrichtung
- 83: Papiersattel
- 84: Metallstange
- 85: Schlitz
- 86: Halterung, Haltelappen
- 87: Querstange
- 88: Führungsbereich
- 89: Fangbereich
- 90: Lichtschranke
- D: Detektor
- C: Gerätesteuerung
- M: Motor
- 91: Umlenkprofil
- 92: Abstandsbleche
- 93: Hebel
- 94: Partikelbalken
- 95: Passierschlitz, Kalibrierspalt
- 96: Lagerbock
- 97: Drehpunkt
- 98: Rastvorrichtung
- 99: Mikroschalter

## Patentansprüche

1. Papierteilereinrichtung für eine elektrofotografische Druckeinrichtung bei der vorgefaltetes Endlospapier (12) über eine Papiertransportvorrichtung (44) von einem Vorratsstapel (11) abgezogen und einem Druckbereich der elektrofotografischen Druckeinrichtung zugeführt wird, wobei zwischen der Papiertransportvorrichtung (44) und dem Vorratsstapel (11) die Papierbahn (12) in einer ersten Umlenkrichtung über ein erstes Umlenkelement (32) geführt ist, dessen Umlenkradius derart bemessen ist, daß unerwünscht zusammenhaftende Papierlagen aufgefächert werden und daß in Papiertransportrichtung dem ersten Umlenkelement (32) nachgeordnet ein weiteres die Papierbahn gegen die erste Umlenkeinrichtung umlenkendes zweites Umlenkelement (34) angeordnet ist,
**dadurch gekennzeichnet**, daß das erste Umlenkelement (32) abschwenkbar und das zweite Umlenkelement (34) stationär im Schwenkbereich des ersten Umlenkelementes (32) angeordnet ist und daß in einer der abgeschwenkten Position (Position A) des ersten Umlenkelementes zugeordneten Einlegepositon die Papierbahn in die Papiertransportvorrichtung (44) einlegbar ist und daß beim Verschwenken des ersten Umlenkelementes (32) in eine Betriebsposition (Position B) mit eingeschwenktem ersten Umlenkelement (32) das Umlenkelement die Papierbahn (12) einseitig erfaßt und in den Bereich des zweiten Umlenkelementes (34) bringt.

2. Papierteilereinrichtung nach Anspruch 1, **dadurch gekennzeichnet,** daß das erste Umlenkelement (32) an einem freien Ende einer Betätigungsschwinge (14) angeordnet ist.

3. Papierteilereinrichtung nach einem der Ansprüche 1 oder 2, **dadurch gekennzeichnet**, daß die Betätigungsschwinge (14) Papierleitelemente (69) aufweist.

4. Papierteilereinrichtung nach einem der Ansprüche 1 bis 3, **dadurch gekennzeichnet**, daß die Betätigungsschwinge (14) derart schwenkbar befestigt ist, daß in der Einlegeposition (Position A) die Papierelemente (40, 69) der Betätigungsschwinge (14) zusammen mit weiteren Papierleitelementen (68, 58, 59) der Papiertransporteinrichtung einen Einlegekanal (67) für die Papierbahn bilden.

5. Papierteilereinrichtung nach einem der Ansprüche 1 bis 5, **dadurch gekennzeichnet,** daß die Umlenkelemente (32, 34) als Papierwalzen ausgebildet sind.

6. Papierteilereinrichtung nach einem der Ansprüche 2 bis 5, **dadurch gekennzeichnet,** daß die Betätigungsschwinge (14) einen Betätigungsgriff (81) mit einer zugeordneten Verriegelungseinrichtung für die Betriebsposition (Position B) aufweist.

7. Papierteilereinrichtung nach einem der Ansprüche 1 bis 6, **dadurch gekennzeichnet,** daß gegenüber dem ersten Umlenkelement (32) in einem einen Durchlaß für die Papierbahn bildenden Abstand ein Papierleitelement (36) angeordnet ist.

8. Papierteilereinrichtung nach Anspruch 7, **dadurch gekennzeichnet,** daß das Papierleitelement (36) Teil eines Auffangkorbes (38) bildet.

## Claims

1. A paper-dividing device for an electrophotographic printer in which prefolded reel paper (12) is drawn from a stockpile (11) by means of a paper-transport device (44) and fed to a printing area of the electrophotographic printer, the paper web (12) being guided between the paper-transport device (44) and the stockpile (11) in a first deflecting direction via a first deflecting element (32), the deflection radius of which being dimensioned in such a way that paper layers which adhere together in an undesirable way are famed out and that a further, second deflecting element (34) which deflects the paper web towards the first deflecting direction is arranged downstream of the first deflecting element (32) in the direction of paper-transport, characterized in that the first deflecting element (32) is arranged swivellably and the second deflecting element (34) in stationary fashion in the swivel area of the first deflecting element (32), and in that in an insertion position assigned to the swivelled position (position A) of the first deflecting element, the paper web can be inserted into the paper-transport device (44), and wherein, when the first deflecting element (32) is swivelled into an operational position (position B) with swivelled-in first deflecting element (32), the deflecting element grips the paper web (12) on one side and places it in the area of the second deflecting element (34).

2. The paper-dividing device as claimed in claim 1, wherein the first deflecting element (32) is arranged at a free end of an actuation rocker (14).

3. The paper-dividing device as claimed in one of claims 1 or 2, wherein the actuation rocker (14) has paper-guiding elements (69).

4. The paper-dividing device as claimed in one of claims 1 to 3, wherein the actuation paper-guiding elements (68, 58, 59) of the paper-transport device, form an insertion channel (67) for the paper web.

5. The paper-dividing device as claimed in one of claims 1 to 5, wherein the deflecting elements (32, 34) are constructed as paper rollers.

6. The paper-dividing device as claimed in one of claims 2 to 5, wherein the actuation rocker (14) has an actuation handle (81) with an assigned locking device for the operational position (position B).

7. The paper-dividing device as claimed in one of claims 1 to 6, wherein, opposite the first deflecting element (32), a paper-guiding element (36) is arranged at a distance forming a passage for the paper web.

8. The paper-dividing device as claimed in claim 7, wherein the paper-guiding element (36) forms part of a collecting tray (38).

## Revendications

1. Dispositif de séparation du papier pour un dispositif d'impression électrophotographique, dans lequel du papier (12) sans fin préalablement plié est retiré d'une pile de réserve (11) par l'intermédiaire d'un dispositif de transport de papier (44) et est amené à une zone d'impression du dispositif d'impression électrophotographique, la bande de papier (12) étant guidée dans une première direction de renvoi, entre le dispositif (44) de transport du papier et la pile de réserve (11), par un premier élément de renvoi (32), dont le rayon de renvoi est tel que des couches de papier qui adhèrent entre elles d'une manière indésirable, sont séparées en éventail et, en aval du premier élément de renvoi (32), dans la direction de transport du papier, est monté un second élément de renvoi (34), qui renvoie la bande de papier vers le premier dispositif de renvoi,
caractérisé par le fait que le premier élément de renvoi (32) est monté de manière à pouvoir être éloigné par basculement et que le second élément de renvoi (34) est monté fixe dans la zone de basculement du premier élément de renvoi (32), et que dans l'une des positions d'insertion associée à la position écartée par basculement (position A) du premier élément de renvoi, la bande de papier peut être insérée dans le dispositif (44) de transport du papier et que lors ddu basculement du premier élément de renvoi (32) dans une position de fonctionnement (position B), alors que le premier élément de renvoi (32) est introduit par basculement, l'élément de renvoi saisit d'un côté la bande de papier (12) et l'emporte dans la zone du second élément de renvoi (34).

2. Dispositif de séparation du papier selon la revendication 1, caractérisé par le fait que le premier élément de renvoi (32) est disposé à une extrémité libre d'un bras de manoeuvre (14).

3. Dispositif de séparation du papier suivant l'une des revendications 1 ou 2, caractérisé par le fait que le bras de manoeuvre (14) comporte des éléments (69) de guidage du papier.

4. Dispositif de séparation du papier suivant l'une des revendications 1 à 3, caractérisé par le fait que le bras de manoeuvre (4) est monté basculant de sorte que, dans la position d'insertion (position A), les éléments (40,69) de guidage du papier du bras de manoeuvre (14) forment, conjointement avec les autres éléments (68,58,59) de guidage du papier du dispositif de transport du papier, un canal d'insertion (67) pour la bande de papier.

5. Dispositif de séparation du papier suivant l'une des revendications 1 à 5, caractérisé par le fait que les éléments de renvoi (32,34) sont sous la forme de rouleaux à papier.

6. Dispositif de séparation du papier suivant l'une des revendications 2 à 5, caractérisé par le fait que le bras de manoeuvre (14) comporte un organe de préhension (81) ayant un dispositif associé de verrouillage pour la position de fonctionnement (position B).

7. Dispositif de séparation du papier suivant l'une des revendications 1 à 6, caractérisé par le fait qu'un élément (36) de guidage du papier est disposé en face du premier élément de renvoi (32) à une distance formant un passage pour la bande de papier.

8. Dispositif de séparation du papier suivant la revendication 7, caractérisé par le fait que l'élément (36) de guidage du papier fait partie d'un panier récepteur (38).
